# EUROPEAN PATENT APPLICATION

(11) **EP 2 178 068 A1**
(43) Date of publication of application: **21.04.2010**
(21) Application number: 08018192.8
(22) Date of filing: 16.10.2008
(51) Int. Cl.: G09B 29/10

(54) **Map data comparison device**

(71) Applicant: HONDA MOTOR CO., LTD., Tokyo 107-8556 (JP)
(72) Inventor: Aylett Jason, Swindon, Wiltshire SN3 4TZ (GB); Gayle Noel, Slough, Berkshire SL3 8QY (GB); Clapham Neil, Slough, Berkshire SL3 8QY (GB)
(74) Representative: Prechtel, Jörg

(57) **Abstract**

A map data comparison device by which a plurality of map data is presented including: a first retrieval member which retrieves a first map data; a second retrieval member which retrieves a second map data; a display member which displays the first map data and the second map data in the vicinity of each other; an operation member by which a first display status of either of the first map data or the second map data is operated; and a follow-processing member which changes a second display status of the other one of the first map data or the second map data so as to follow the operation of the operation member.

## Description

### BACKGROUND OF THE INVENTION

### Field of the Invention

The present invention relates to a map data comparison device.

### Description of Related Art

Conventionally, navigation systems are known, which updates the map data by the units of geographic regions (e.g., region, prefecture, city, town, and village) based on the users demand (see, for example, Japanese Unexamined Patent Application, First Publication No. 2004-317735).

In the navigation systems related to the above-descried conventional technology, map data are merely updated by the regional units based on the users demands. In the system, when the user perform the updating procedure, the user is unable to confirm the detailed updating contents of the map data, and therefore unable to determine the information value of the new map data for the user. Accordingly, there is a problem that an excessive burden is demanded to the user in the updating procedure, in terms of efforts and costs.

Accordingly, an object of the present invention is to provide a map data comparison device which can reduce the efforts and costs required in a map data updating.

### SUMMARY OF THE INVENTION

In order to achieve the object, the present invention employed the following.
(1) A map data comparison device by which a plurality of map data is presented including: a first retrieval member which retrieves a first map data; a second retrieval member which retrieves a second map data; a display member which displays the first map data and the second map data in the vicinity of each other; an operation member by which a first display status of either of the first map data or the second map data is operated; and a follow-processing member which changes a second display status of the other one of the first map data or the second map data so as to follow the operation of the operation member.
   According to the map data comparison device, the first map data and the second map data can be thoroughly compared visually by a user, and the differences thereof can be recognized readily. Moreover, when the operation member is operated by the user, to change a display status of either of the first map data or the second map data, the follow-processing member changes the display status of the other map so as to follow the operation of the operation member, enabling instant and easy comparison of the maps.
(2) Moreover, it may be arranged such that: the first map data is a most recent map data.
   In this case, the second map data can be easily compared with the most recent map data.
(3) Moreover, it may be arranged such that: the display member displays the first map data and the second map data side by side.
(4) Moreover, it may be arranged such that: the operation member includes a display position changing member.
(5) Moreover, it may be arranged such that: the display position changing member includes an input screen to input a location to be displayed, or a screen cursor by which the display position is scrolled.
(6) Moreover, it may be arranged such that: the operation member includes a scaling factor changing member.

### BRIEF DESCRIPTION OF THE DRAWINGS

FIG 1 is a construction view of one embodiment of a map data comparison device according to the present invention.
FIG 2 is a flow chart showing the operation of the map data comparison device of the embodiment.
FIG 3 is one example of a display screen of the map data comparison device of the embodiment.
FIG. 4 is another example of the display screen of the map data comparison device of the embodiment.
FIG 5 is yet another example of the display screen of the map data comparison device of the embodiment.
FIG 6 is a construction view of a modified example of the map data comparison device according to the present invention.

### DETAILED DESCRIPTION OF THE INVENTION

Hereinafter, one embodiment of a map data comparison device according to the present invention is explained with reference to the figures.

The map data comparison device according to the present invention, for example, may be constituted using a personal computer provided privately and connected to the internet via world wide web, or an industrial terminal provided at a car shop or a dealer.

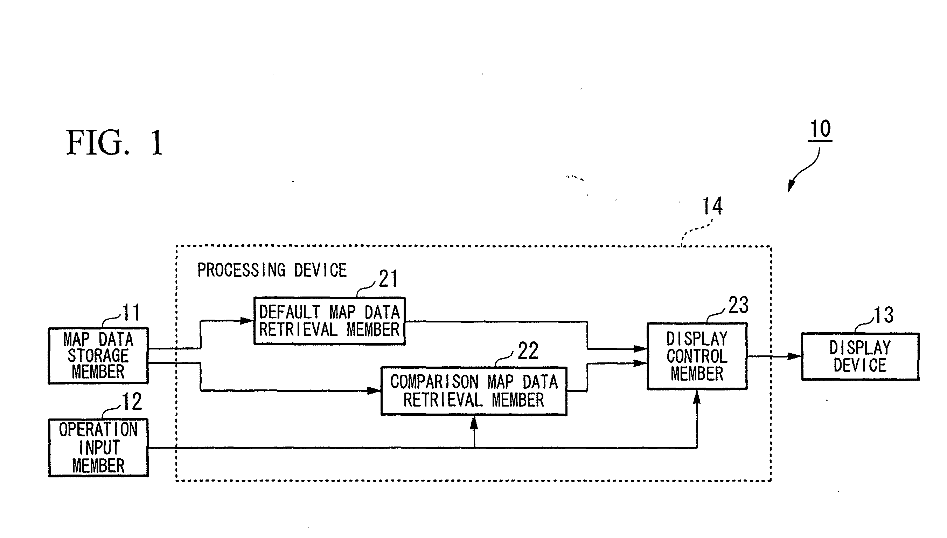

As shown in FIG. 1, a map data comparison device 10 according to the embodiment includes, for example, a map data storage member 11, an operation input member 12, a display device 13, and a processing device 14.

The map data storage member 11 includes computer-readable recording medium, e.g., an optical disc drive such as a Digital Versatile Disc drive (DVD), a magneto-optical disc drive, or a hard disk drive installed in a computer system. The map data storage member 11 stores map data to display a map on a display screen 13a of the display device 13.

The map data includes, for example, topographic maps, polygon data corresponding to various facilities, city blocks, lakes, and marshes, character data corresponding to each of the polygons such as facility names and place-names, various symbols data, and road data.

The road data is information regarding connection status and configurations of the roads. The road data includes, for example, data such as nodes (i.e., points on a coordination system in order to describe the road configurations), links which are lines connecting the nodes, distances of each of the links, and types, widths, crossing angles and shapes of the roads.

The map data storage member 11 stores not only the most recent edition of the map data (latest map data), but also older editions of the map data accumulated by a series of updates.

The operation input member 12 includes, for example, a keyboard, a mouse, switches, push buttons, or a touchscreen, and outputs signals according to the input operations of a user.

The display device 13 controls the display of the map data on the display screen 13a, based on the outputted signals from the operation input member 12.

The processing device 14 includes, for example, a default map data retrieval member 21, a comparison map data retrieval member 22, and a display control member 23.

The default map data retrieval member 21 retrieves the latest map data from the map data storage member 11, and outputs the latest map data to the display control member 23.

When an edition (version) number of the map data is specified by the signal outputted from the operation input member 12, the comparison map data retrieval member 22 retrieves the map data corresponding to the edition number, and outputs the map data to the display control member 23, When no edition number of the map data is specified, the map data is retrieved following a predetermined rule (e.g., to retrieve the map data of an edition number which is one edition older than the latest), and outputted to the display control member 23.

The display control member 23 controls the map data display status (e.g., the display position or scale) on the display screen 13a of the display device 13, in accordance with the signal outputted from the operation input member 12.

The display control member 23 displays an initial screen on the display screen 13a of the display device 13, for example, at a time in the starting-up process of the map data comparison device 10. The initial screen includes: a map around a predetermined position (e.g., the location of the car dealer); an input screen for the display position; an input screen for a command selection, for executing procedures such as displaying the initial screen, performing the map data comparison, and the like.

In the input screen for the display position, information for specifying the display position can be inputted, including, for example, country, city, town, address, street number, postal number, Point Of Interest (POI), and the like.

The display control member 23 displays a map around the display position in the initial screen, according to the location inputted by the operator through the operation input member 12. To display the map, the latest map data outputted by the default map data retrieval member 21, and the older edition map data outputted by the comparison map data retrieval member 22 are arranged side by side. Moreover, when the display status of either one of the latest map data or the older edition map data (the latest map data, in this example) was changed in response to the signal outputted by the operation input member 12, the display control member 23 also changes the display status of the other map data (the older edition map data, in this example), following the change.

The map data comparison device 10 according to the embodiment has the constitution as explained above. Hereinafter, the operation of the map data comparison device 10 is explained.

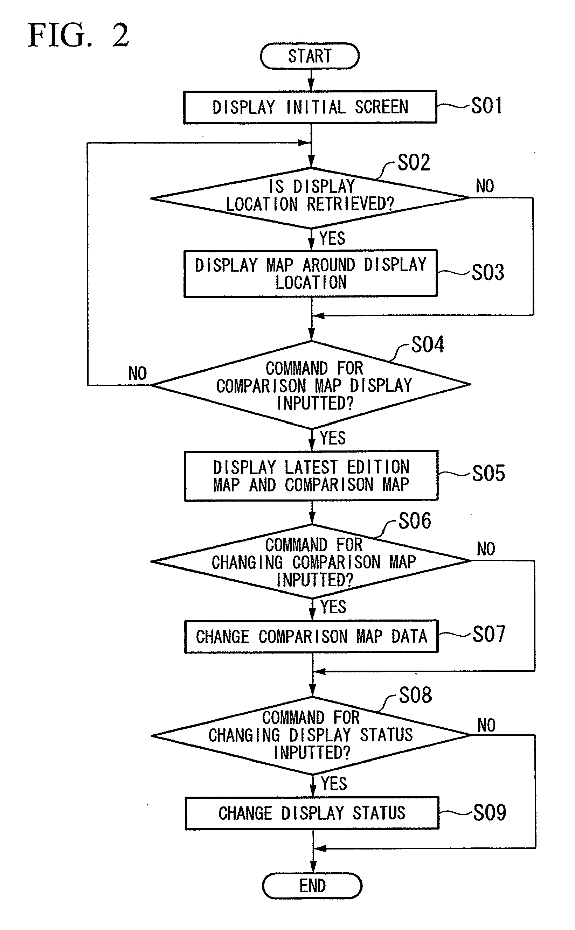

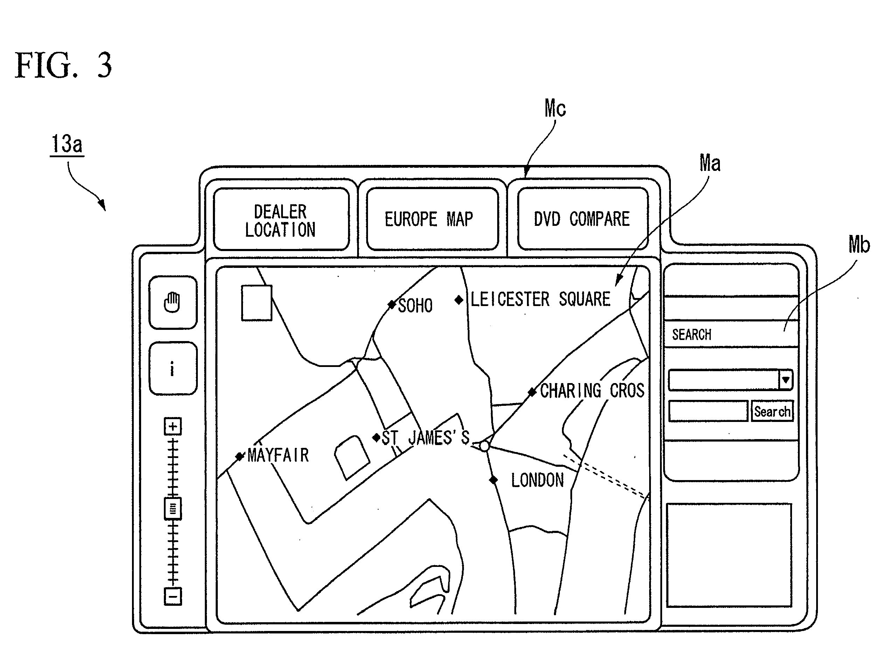

First, in step S01 shown in FIG 2, an initial screen as shown in FIG. 3 is displayed on the display screen 13a of the display device 13. The initial screen may include, for example: the map around the predetermined position (e.g., map Ma in FIG 3); the input screen for the display position (e.g., input screen Mb in FIG 3); and the input screen for a command selection (e.g., input screen Mc in FIG 3), for executing procedures such as displaying the initial screen, performing the map data comparison, and the like.

Next, in step S02, it is determined whether a display position inputted from the operator is retrieved via the operation input member 12, in the input screen for display position (e.g., input screen Mb in FIG 3).

When the determination result is NO, the process proceeds to step S04, as described below.

On the other hand, when the determination result is YES, the process proceeds to step S03. In step S03, the map around the retrieved display position is displayed on the display screen 13a, using to the latest map data.

Next, in step S04, it is determined whether a command of a map data comparison is inputted by the operator, via the operation input member 12.

When the determination result is NO, the process goes back to the above-described step S02.

On the other hand, when the determination result is YES, the process proceeds to step S05.

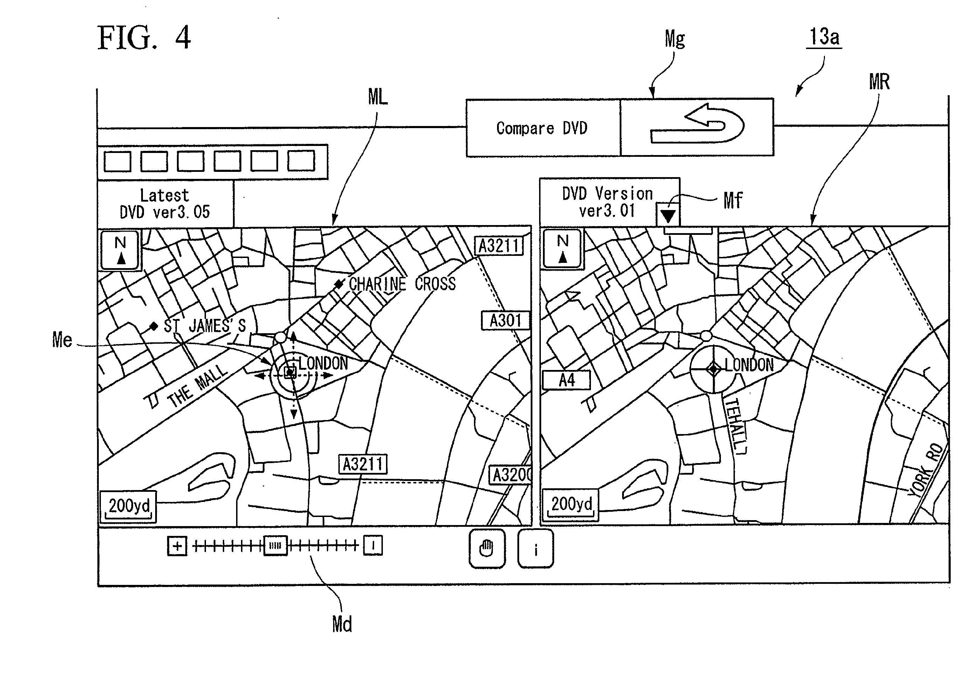

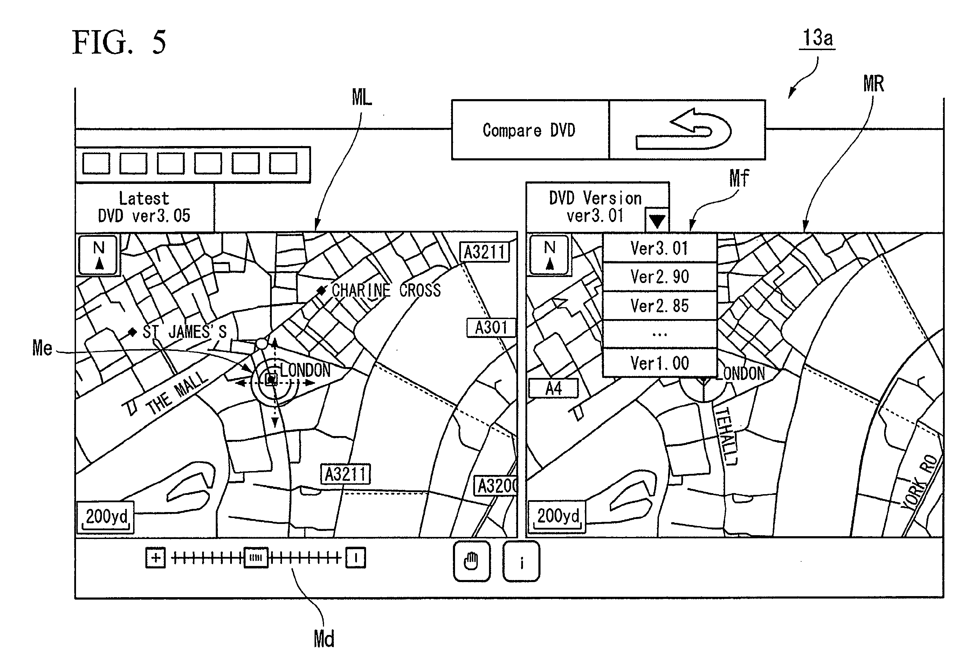

In step S05, as shown in FIGS. 4 and 5, the latest map data (map ML in FIGS. 4 and 5) and the predetermined edition of the older map data (map MR in FIGS. 4 and 5) are displayed side by side (or top and bottom, or the like) on the display screen 13a, using the same scale. The displayed map position may be either around the display position retrieved in step S03, or around the predetermined default display position such as the location of the car dealer.

Moreover, in step S05, in addition to displaying the two maps (ML and MR in FIGS. 4 and 5) along with the respective edition number, the following elements are also displayed on the display screen 13a: a command input screen for changing the scaling factor (input screen Md in FIGS. 4 and 5), either for the latest map or for the older map (for the latest map, in this example); a cursor (cursor Me in FIGS. 4 and 5) indicating that the display position of the map can be changed by scrolling, either for the latest map or for the older map (for the latest map, in this example); a command input screen in the format of a pull-down selection menu for changing the map edition number of the older map data (input screen Mf in FIGS. 4 and 5); and a command input screen to display the initial screen (input screen Mg in FIGS. 4 and 5).

In step S06, the process determines whether or not a command for changing the comparison map is inputted from the operator, through the operation input member 12, in the input screen with the pull-down menu format (input screen Mf in FIGS. 4 and 5, or the like) in which a selection can be made to change the map edition number of the comparison map data (i.e. the older map data).

When the determination result is NO, the process proceeds to the step S08, which will be explained later.

On the other hand, when the determination result is YES, the process proceeds to step S07. In step S07, the comparison map data is changed according to the input from the operator.

In step S08, the process determines whether or not a command for changing the display status of the map is inputted. The process determines, for example: whether or not an input of a command to change the scaling factor is inputted from the operator, through the operation input member 12 in the command input screen for changing the scaling factor (input screen Md in FIGS. 4 and 5); or, whether or not an input of a command to change the display position is inputted from the operator, through a scrolling operation on the display screen 13a in the portion, for example, the latest map is displayed.

When the determination result is NO, the process proceeds to END, and terminates.

When the determination result is YES, the process proceeds to step S09.

In step S09, in response to the operator's command to change the display status (the display position, the scaling factor, or the like) of either the latest map or the older edition map (the latest map, in this example), the display status of one of the maps (the latest map, in this example) is changed. In addition, following the change of the display status of the first one of the maps, the display status of the other map (the older edition map, in this example) is changed in a corresponding manner. Thereafter, the process proceeds to END, and terminates.

As explained above, according to the embodiment of the map data comparison device 10, by displaying the default latest map next to the comparison older edition map, the differences between the two map data can be readily recognized by the operator and other users. Moreover, by merely operating the display status (the display position, the scaling factor, or the like) of one of either the latest map or the older edition map, the display status of the other map can follow the change, enabling an easy comparison of the latest map data and the older edition map data.

In the above-descried embodiment, the default map data retrieval member 21 and the comparison map data retrieval member 22 retrieve the respective map data from the map data storage member 11. However, the constitution of the present invention is not limited to the above. The data can also be retrieved, for example, by a data communication with an outside data source.

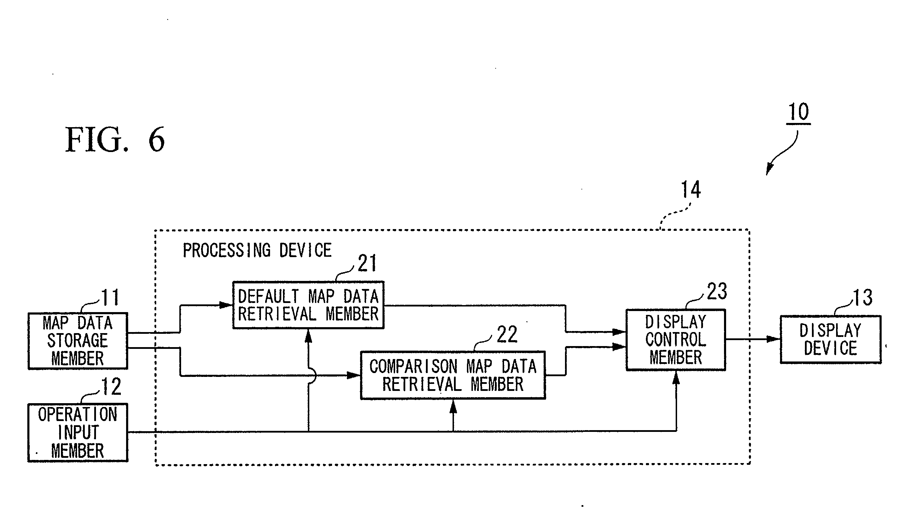

In the above-described embodiment, as shown in FIGS. 4 and 5, the comparison map data (i.e., the older edition map data) was changeable. However, the constitution of the present invention is not limited to the above. The default map data may also be changeable. In this case, as shown in FIG 6, if an edition number for the map data is specified by a signal outputted from the operation input member 12, the default map data retrieval member 21 retrieves a map data corresponding to the specified edition number, and outputs the data to the display control member 23. If no edition number of the map data is specified, the default map data retrieval member 21 retrieves the latest map data, and outputs the data to the display control member 23.

In this case, a comparison of two different older edition map data can be provided for the user, further improving the utility of the device.

A map data comparison device by which a plurality of map data is presented including: a first retrieval member which retrieves a first map data; a second retrieval member which retrieves a second map data; a display member which displays the first map data and the second map data in the vicinity of each other; an operation member by which a first display status of either of the first map data or the second map data is operated; and a follow-processing member which changes a second display status of the other one of the first map data or the second map data so as to follow the operation of the operation member.

## Claims

1. A map data comparison device (10) by which a plurality of map data is presented, comprising:
a first retrieval member (21) which retrieves a first map data (ML);
a second retrieval member (22) which retrieves a second map data;
a display member (13) which displays the first map data (ML) and the second map data (MR) in the vicinity of each other;
an operation member (12) by which a first display status of either of the first map data (ML) or the second map data (MR) is operated; and
a follow-processing member which changes a second display status of the other one of the first map data (ML) or the second map data (MR) so as to follow the operation of the operation member (12).

2. The map data comparison device (10) according to claim 1, wherein the first map data (ML) is a most recent map data.

3. The map data comparison device (10) according to claim 1, wherein the display member (13) displays the first map data (ML) and the second map data (MR) side by side.

4. The map data comparison device (10) according to claim 1, wherein the operation member (12) includes a display position changing member.

5. The map data comparison device (10) according to claim 4, wherein the display position changing member includes an input screen to input a location to be displayed (Mf), or a screen cursor by which the display position is scrolled (Me).

6. The map data comparison device (10) according to claim 1, wherein the operation member (12) includes a scaling factor changing member (Md).
